# EUROPEAN PATENT SPECIFICATION

(11) **EP 2 302 864 B1**
(45) Date of publication and mention of the grant of the patent: **15.11.2017**
(21) Application number: 09771909.0
(22) Date of filing: 10.02.2009
(51) Int. Cl.: H04L 29/06

(54) **METHOD FOR PROCESSING TLV FORMAT OF COMMUNICATION DATA**
VERFAHREN ZUM VERARBEITEN DES TLV-FORMATS VON KOMMUNIKATIONSDATEN
PROCÉDÉ POUR TRAITER LE FORMAT TLV POUR DES DONNÉES DE COMMUNICATION

(30) Priority: 02.07.2008 CN 200810137647
(43) Date of publication of application: 30.03.2011
(73) Proprietor: ZTE Corporation, Shenzhen, Guangdong 518057 (CN)
(72) Inventor: ZHANG, Xinping, Guangdong 518057 (CN)
(74) Representative: Ilgart, Jean-Christophe
(86) International application number: PCT/CN2009/070391
(87) International publication number: WO 2010/000139

(56) References cited:
- CN-A- 1 359 065
- CN-A- 1 627 757
- CN-A- 101 149 753
- CN-A- 101 316 241
- NEUFELD G ET AL: "An overview of ASN.1", COMPUTER NETWORKS AND ISDN SYSTEMS, NORTH HOLLAND PUBLISHING. AMSTERDAM, NL, vol. 23, no. 5, 1 February 1992 (1992-02-01), pages 393-415, XP026635867, ISSN: 0169-7552, DOI: 10.1016/0169-7552(92)90014-H [retrieved on 1992-02-01]

## Description

### Filed of the Invention

The present invention relates to the field of communication, and in particular to a method for processing a TLV format of communication data.

### Background of the Invention

Abstract Syntax Notation 1 (ASN.1 for short) is a standard method for describing a message format transmitted in a network defined by the International Telecommunications Union (ITU for short), which is used to provide a standard format for data conversion between nodes. Each node only needs to know a data format which is translated from the ASN.1 or translated into the ASN.1, but a format in which data exists in other places of the network is unnecessary,.

The ASN.1 has two parts: the first part (ISO 8824/ITU X.208) describing data, a data type, and a sequence format in a message, which is a syntax of data; and the second part (ISO 8825/ITU X.209) describing a rule regarding how to constitute a message by data of respective parts, which is a basic rule of data encoding. The ASN.1 was developed as a part of the X.409 at the earliest and became an independent standard afterwards. The first-generation Public Key Infrastructure (PKI for short) standard is mainly based on the ASN.1. In a Simple Network Management Protocol (SNMP for short), the ASN.1 is used to define a SNMP data unit and a format of an object.

The ASN.1 is widely applied in communication field and computer field and other fields. The ASN.1 message has the following special properties.
1. The message is of a tree structure which can define multilayer nested message as desired.
2. The data type of a node in the message might be a simple data type, e.g. INTEGER, GRAPHICSTRING, ENUM, etc., or a composite data type containing a sub-node, e.g. SET, SEQUENCE, SET OF, SEQUENCE OF.
3. In the SET type or the SEQUENCE type, a certain node might be absent since the corresponding message node is allowed to be set as OPTIONAL, which means that it is not essential. When using an ASN.1 file, an ASN.1 type is first defined in the ASN.1 file and then complied by a compiler, such that the ASN.1 type becomes an intermediate programming language type, such as a java or C++ language, and then a corresponding programming language type is used to achieve the purpose of communication.
4. The ASN.1 supports BER encoding, DER encoding, VAL encoding, etc., which can encode an example of an intermediate language type into a code stream and decode the code stream into an example of the corresponding intermediate language type.
5. The defining format used by the ASN.1 is: "NewStructName ::=defining a message", e.g. UserNameList-T::= SEQUENCE OF UserName-T, which indicates that the UserNameList-T type is defined as an array with UserName-T as an element.

In a Client/Server (C/S) architecture of a software, the Client and the Server need to communicate therebetween. The communication message generally has two formats: a private format and a standard format, e.g. protocols of ASN.1, SNMP, etc.

A common method of using the ASN.1 message in a C/S type software includes:
1. establishing a connection between a client terminal and a server terminal;
2. the client terminal interacting with the server terminal through a protocol, including:
   1) a message sending side filling in a message header and a message body of the ASN.1 message, wherein the message header includes a command code, and the message body uses an AsnAny type with its real data type varying depending on the command code;
   2) the message sending side encoding the message into a code stream and sending it to a message receiving side;
   3) the message receiving side receiving the code stream of the message, decoding the message header, and then decoding the message body using a specific data type according to the common code therein; and
   4) the message receiving side making a corresponding response according to the contents of the message;
3. finishing the interaction and disconnecting the connection.

In communication, data which is constituted according to the format of "data type, data length, data body" is represented as "Type, Length, Value", which is called as a TLV format for short. It is very convenient and highly efficient to use a TLV format to constitute data, especially suitable for a length-variable data. The constitution of the contents of a data body in an application layer generally uses such a format. The BER encoding in the ASN.1 is actually a TLV encoding.

In the related art, the data type T in the TLV encoding can not be customized by a user. If the same type name is not defined in a same way in different versions, the Client and the Server may not communicate. That is to say, the versions of message protocols at the Client terminal and Server terminal shall be consistent. If they are not consistent, the two sides can not interact with each other.

NEUFELD G ET AL:"An overview of ASN.1" , COMPUTER NETWORKS AND ISDN SYSTEMS, NORTH HOLLAND PUBLISHING. AMSTERDAM ,NL ,vol .23 ,no.5 ,1 February 1992(1992-02-01), pages 393-415, XP026635867, ISSN: 0169-7552, DOI: 10.1016/0169-7752(92) 90014-H [retrieved pm 1992-02-02]* paragraph [0001]-paragraph [0003] provides respective technical solutions; however, the above mentioned problem still remains unsolved. **Summary of the Invention**

In view of the problem present in the related techniques that the Client and the Server fail to communicate with each other when the versions of message protocols of the two sides are not consistent, the present invention is proposed. Therefore, the present invention aims to provide an improved method for processing a TLV format of communication data so as to solve the above problem in the related techniques.

In the embodiments of the present invention, there is provided a method for processing a TLV format of communication format according to the method of claim 1 (as amended).

Preferably, defining the integer type in the ASN.1 format particularly comprises: setting the ASN.1 format to allow defining the integer type; and defining a structure of the integer type in a format of "string type name [X]:: =defining a structure", wherein the X refers to the integer type.

Preferably, defining the structure of the integer type in the format of "string type name [X]:: =defining a structure" particularly comprises: setting the structure of the integer type as a type of SEQUENCE, SET or CHOICE with the same type name, and specifying that if the member thereof needs be modified, it is only allowed of net increase or net decrease in the members and only allowed to change a tail member but not allowed to modify the type.

Preferably, the method for processing the TLV format further comprises: setting an ASN.1 format compiler with a function of processing the integer type.

Preferably, the method for processing the TLV format further comprises: obtaining, through a function, the integer type in a C++ type in the ASN.1 format.

Preferably, the step of the sending side encoding the message into the code stream comprises: calling a value encoding function, a length encoding function, and an integer type encoding function by an integration encoding function, or calling only the value encoding function by the integration encoding function, to encode the message into the code stream; the integer type encoding function being used for obtaining the integer type of the code stream according to data encoding in the data structure instance; the value encoding function being used for encoding simple data in the data structure instance into the V of the code stream as for the data structure instance of a simple data type; the value encoding function being used for sequentially calling the integration encoding function of individual members in the data structure instance as for the data structure instance of the SEQUENSE or SET type; the value encoding function being used for sequentially calling the integration encoding function of individual elements of an array in the data structure instance as for the data structure instance of the SEQUENSE OF or SET OF type; and the value encoding function being used for encoding a selected member in the data structure instance into the V of the code stream as for the data structure instance of the CHOICE type, wherein the V comprises the sequence number of the selected member in the CHOICE and the selected member.

Preferably, when the integer type is 0 or absent, the integration encoding function calls only the value encoding function; and when the integer type is not 0, the code stream comprises the V, the length L of the V, and an integer type.

Preferably, the method for processing the TLV format further comprises: a receiving side decoding the code stream.

Preferably, decoding the code stream particularly comprises: calling a value decoding function, a length decoding function, and an integer type decoding function by an integration decoding function, or calling only the value decoding function by the integration decoding function, to decode the code stream; the integer type decoding function being used for decoding the code stream according to the integer type in the code stream; the value decoding function being used for decoding the V in the code stream into simple data in the data structure instance as for the data structure instance of a simple data type; the value decoding function being used for decoding sequentially the V in the code stream into data of individual members in the data structure instance as for the data structure instance of the SEQUENSE or SET type; the value decoding function being used for decoding sequentially the V in the code stream into individual elements of an array in the data structure instance as for the data structure instance of the SEQUENSE OF or SET OF type, during which it is judged whether the length of a decoding stream in the structure is smaller than L, and if it is smaller than the L, the decoding is continued, otherwise, the decoding in the present structure is stopped; and the value decoding function being used for decoding a sequence number in the code stream and a member corresponding to the sequence number as for the data structure instance of the CHOICE type, wherein if the member corresponding to the sequence number does not exist in the present structure, the value decoding function is finished.

Preferably, the step of calling the value decoding function, the length decoding function, and the integer type decoding function by the integration decoding function or calling only the value decoding function by the integration decoding function to decode the code stream particularly comprises: determining whether the integer type is 0 or absent by the integration decoding function; if it is not 0 or not absent, calling the value decoding function, the length decoding function, and the integer type decoding function, wherein the value decoding function is called to decode the integer type in the code stream to verify whether the obtained integer type is consistent with itself integer type, and if it is not consistent, it is considered as abnormal decoding, the length decoding function is called to decode the L in the code stream, and then the value decoding function is called to decode the V in the code stream; if the length vL obtained by decoding the V is smaller than the L, L-vL bytes are skipped; and if it is 0 or absent, calling only the value decoding function.

The methods for processing the TLV format in the above embodiments of the present invention can overcome the defect of that different versions of protocols can not intercommunicate due to adding a method for extending the T in the ASN. 1 format so as to realize intercommunication among different versions of the ASN. 1 and realize an object-oriented TLV method.

Other characteristics and advantages of the present invention are described in the subsequent parts of the description, and moreover are partly apparent from the description, or understood by implementing the present invention. The object and other advantages of the present invention can be realized and obtained by a structure particularly indicated in the description, the claims and the drawings.

### Brief Description of the Drawings

The drawings illustrated herein provide a further understanding of the present invention and form a part of the present application. The illustrative embodiments of the present invention and the description thereof are used to explain the present invention without unduly limiting the present invention, wherein:
Fig. 1 is a flow chart of a method for processing a TLV format of communication data according to an embodiment of the present invention;
Fig. 2 is a schematic diagram of a developing process in which a client side and a server share a same language developing environment according to a preferable embodiment of the present invention;
Fig. 3 is a view of a developing process in different language developing environments according to a preferable embodiment of the present invention;
Fig. 4 is a schematic diagram of a developing process in which a client side and a server use different language developing environments and different protocol versions according to a preferable embodiment of the present invention;
Fig. 5 is a schematic diagram of an inheritance system of ESNACC C++ base class types according to a preferable embodiment of the present invention; and
Fig. 6 is a flow chart of a TLV integral decoding function according to a preferable embodiment of the present invention.

### Detailed Description of the Preferable embodiments

### Function Summary

In consideration of the problem present in the related art that the Client and the Server fail to communicate with each other when the versions of the message protocols of the two sides are not consistent, a method for processing a TLV format of communication data is provided by the embodiments of the present invention. In the present embodiment, a method of extending the T is added in the ASN.1 format and a message is filled in the extended ASN.1 format, thereby overcoming the defect that different versions of protocols can not intercommunicate and realizing intercommunication among different versions of the ASN.1 and a TLV object-oriented method.

The present invention will be described in detail hereinafter with reference to the drawings and in combination with the embodiments. If no conflict arises, the embodiments of the present invention and the features of the embodiments can be combined with one another. What needs to be explained is that, the steps shown in the flow charts of the drawings can be implemented in a computer system such as a set of computer executable instructions. Moreover, although a logical order is shown in the flow charts, the shown or described steps can be implemented in the different order in some certain situations.

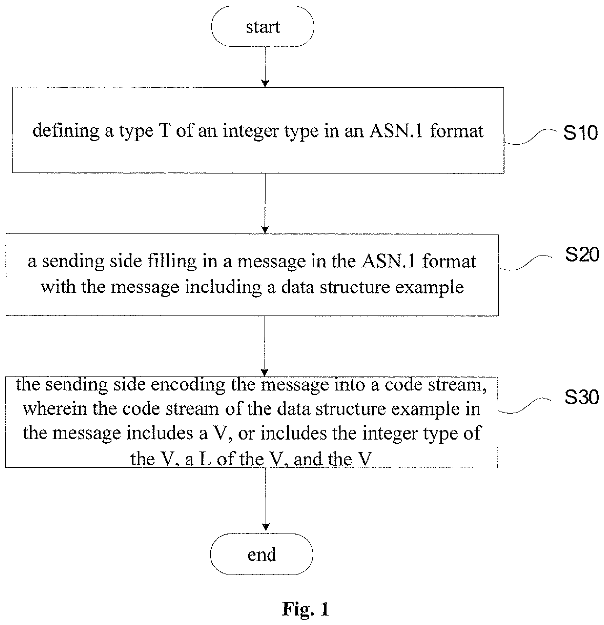

Fig. 1 is a flow chart of a method for processing a TLV format of communication data according to an embodiment of the present invention, including the following steps:
step S10, defining a type T of an integer type in an ASN.1 format;
step S20, a sending side filling in a message in the ASN.1 format with the message including a data structure instance; and
step S30, the sending side encoding the message into a code stream, wherein the code stream of the data structure instance in the message includes a value V, or includes the V, the integer type of the V and a length L of the V.

The method for processing the TLV format overcomes the defect that different versions of protocols can not intercommunicate, and realizes intercommunication among different versions of the ASN.1and a TLV object-oriented method since the method of extending the T is used in the ASN.1 format.

The above processing process is described in detail hereinafter.

### (I) Step S10

The operation of defining the integer type in the ASN.1 format may specifically comprise: setting the ASN.1 format to allow defining the integer type; and defining a structure of the integer type in a format of "string type name [X]:: =defining a structure", wherein the X refers to the integer type. Namely, an extended syntax is added to the ASN.1 syntax to support a self-defined type X (viz. the T in the TLV), which is defined in an optional manner between the type name and the symbol ":: =". If no X is provided, X is regarded as 0, therefore such data only has V but not X and L in a corresponding code stream.

Specifically, the operation of defining the structure of the integer type in the format of "string type name [X]:: =defining a structure" particularly comprises: setting the structure of the integer type as a type of SEQUENCE, SET or CHOICE with the same type name, and specifying that if the member thereof needs be modified, it is only allowed of net increase or net decrease in the members and only allowed to change a tail member but not allowed to modify the type. Following the above rules, the compatibleness of a new protocol message with an old protocol message can be realized. In order to facilitate the management of the protocol message type, it can be required that a new version of the protocol can only be extended on the basis of the type of an old version of the protocol, and the extended members can only be at the tail of a parent type but can not be reduced.

In step S10, since the ASN.1 format is set to allow defining the integer type, such that the ASN.1 format compiler can be provided with a function of processing the integer type. Preferably, the integer type can be obtained through a function in a C++ type in the ASN.1 format.

### (II) Step S20

The operation of the sending side encoding the message into the code stream specifically comprises: calling a value encoding function, a length encoding function, and an integer type encoding function by an integration encoding function, or calling only the value encoding function by the integration encoding function, to encode the message into the code stream., The integer type encoding function is used for obtaining the integer type of the code stream according to data encoding in the data structure instance. Specifically, the value encoding function is used for encoding simple data in the data structure instance into the V of the code stream as for the data structure instance of a simple data type. The value encoding function is used for sequentially calling the integration encoding function of individual members in the data structure instance as for the data structure instance of the SEQUENSE or SET type. The value encoding function is used for sequentially calling the integration encoding function of individual elements of an array in the data structure instance as for the data structure instance of the SEQUENSE OF or SET OF type. The value encoding function is used for encoding a selected member in the data structure instance into the V of the code stream as for the data structure instance of the CHOICE type, wherein the V comprises the sequence number of the selected member in the CHOICE and the selected member.

Preferably, when the integer type is 0 or absent, the integration encoding function calls only the value encoding function, viz. the code stream only comprises V or comprises V and the integer type = 0. When the integer type is not 0, the integration encoding function calls the value encoding function, the length encoding function, and the integer type encoding function, viz. the code stream comprises the V, the length L of the V, and an integer type.

The sending side processing the TLV format is described as above. As for a receiving side, the method for processing the TLV format further comprises: the receiving side decoding the code stream.

Preferably, the operation of decoding the code stream particularly includes:
calling a value decoding function, a length decoding function, and an integer type decoding function by an integration decoding function, or calling only the value decoding function by the integration decoding function, to decode the code stream; using the integer type decoding function for decoding the code stream according to the integer type in the code stream; using the value decoding function for decoding the V in the code stream into simple data in the data structure instance as for the data structure instance of a simple data type; using the value decoding function for decoding sequentially the V in the code stream into data of individual members in the data structure instance as for the data structure instance of the SEQUENSE or SET type; using the value decoding function for decoding sequentially the V in the code stream into individual elements of an array in the data structure instance as for the data structure instance of the SEQUENSE OF or SET OF type, during which it is judged whether the length of a decoding stream in the structure is smaller than L, and if it is smaller than the L, the decoding is continued, otherwise, the decoding in the present structure is stopped; and using the value decoding function for decoding a sequence number in the code stream and a member corresponding to the sequence number as for the data structure instance of the CHOICE type, wherein if the member corresponding to the sequence number does not exist in the present structure, the value decoding function is finished.

Preferably, the operation of calling the value decoding function, the length decoding function, and the integer type decoding function by the integration decoding function or calling only the value decoding function by the integration decoding function to decode the code stream particularly comprises: determining whether the integer type is 0 or absent by the integration decoding function wherein if it is not 0 or not absent, it calls the value decoding function, the length decoding function, and the integer type decoding function, wherein the value decoding function is called to decode the integer type in the code stream to verify whether the obtained integer type is consistent with its own integer type, and if it is not consistent, it is considered as abnormal decoding, then the length decoding function is called to decode the L in the code stream, and then the value decoding function is called to decode the V in the code stream, and if the length vL obtained by decoding the V is smaller than the L, L-vL bytes are skipped; and if it is 0 or absent, it calls only the value decoding function.

The integration decoding function first determines whether the T of itself is 0. If it is not 0, the T is decoded, and it is verified whether the decoded T is consistent with its T, wherein if it is not consistent, it is considered as abnormal decoding, then L is decoded, and then V is decoded, wherein if the length vL of the decoded V is smaller than L, L-vL bytes are skipped to balance the length of the present type; if it is 0, V is decoded directly.

Virtual functions required by the above encoding functions and decoding functions are added to the ASN.1 base classes in an ASN. 1 C ++ basic module, and the classes and the functions of the members thereof required by the above encoding functions and decoding functions are added to an ASN. 1 C++ compiler.

The above preferable embodiment includes two functional modules: a basic module and a compiler. The basis module realizes supporting the TLV base classes and some supporting functions. The compiler realizes analyzing an ASN.1 file, and generating classes corresponding to various ASN.1 types and member functions of the classes. In an application program, the message defined by such a TLV protocol is used to not only realize interaction with protocol messages of same version but also realize interaction between the Client with the Server with the new and old protocol messages to provide guarantee of the encoding rules for the C/S interaction of the protocols of different versions. The embodiments of the present invention can be realized either independently or extendedly on any existing ASN.1 compiler platform.

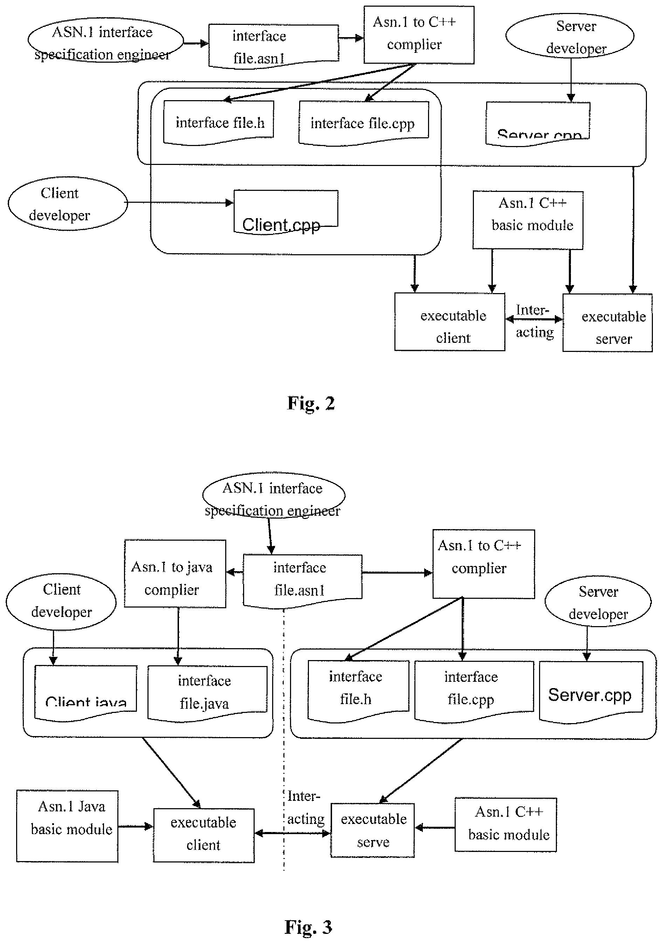

Fig. 2 shows a developing procedure in which the Client and the Server shares a same language developing environment according to a preferable embodiment of the present invention, wherein, the Client and the Server are both developed using C++. The developing procedure includes: A. an interface specification engineer defining an ASN.1 interface file and generating an interface file. h and an interface file.cpp using an Asn.1 C++ compiler; B. a Server developer writing a Server code and compiling it with the interface file.h and the interface file.cpp into an executable server program; C. a Client developer writing a Client code and compiling it with the interface file.h and the interface file.cpp into an executable client program; and D. the executable client program and the executable server program, when being executed, interacting and communicating using the Asn.1 C++ basic module.

Fig. 3 shows a developing procedure in different language developing environments according to a preferable embodiment of the present invention, wherein the Client uses java to develop, and the Server uses C++ to develop. The developing procedure includes: A an interface specification engineer defining an ASN.1 interface file, generating an interface file.h and an interface file.cpp using an Asn.1 C++ compiler for a C++ developer, and generating an interface file.java using an Asn.1 java compiler for a java developer; B. a Server developer writing a Server code and compiling it with the interface file.h and the interface file.cpp into an executable server program; C. a Client developer writing a Client code and compiling it with the interface file.java into an executable client program; and D. the executable client program and the executable server program, when being executed, interacting and communicating using the Asn.1 basic modules of their respective language.

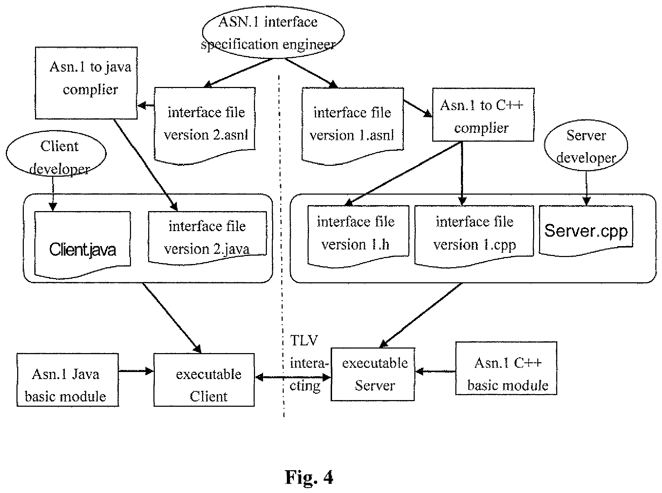

Fig. 4 shows a developing procedure in which the Client and the Server use different language developing environments and different protocol versions according to a preferable embodiment of the present invention, wherein the Server uses an old version, the Client develops with java, and the Server develops with C++, which is relatively complex developing procedure. In the realizing steps, the Client and the Server both develop with C++. The procedure includes:
A. an interface specification engineer defining an interface file version 2.asn when developing a new version based on an interface file version 1.asn defined for the old version, and compiling two versions respectively to generate C++ and Java interface realizing files;
B. a Server developer writing a Server code in the old version and compiling it with an interface file version 1.h and an interface file version 1.cpp into an executable server executing file;
C. a Client developer writing a Client code in a new version and compiling it with the interface file 2.java into an executable client executing file; and
D. the executable Client program and the executable Server program, when being executed, interacting and communicating using the Asn.1 basic modules of their respective language.

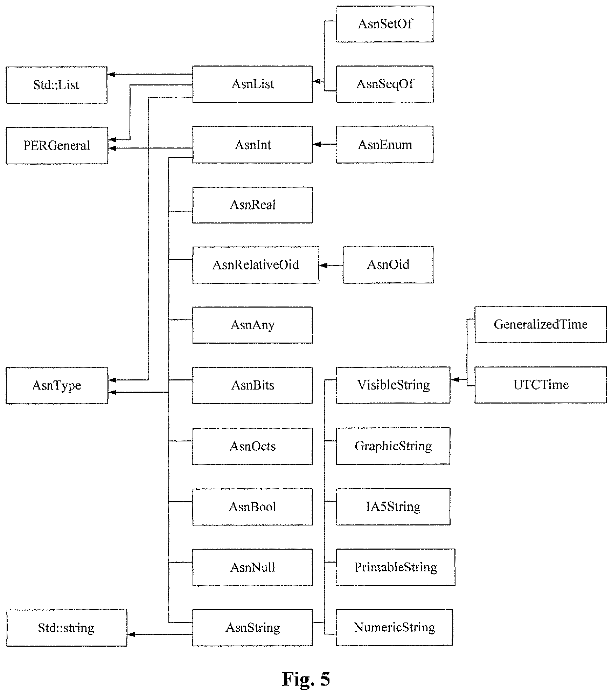

Fig. 5 shows an inheritance system of ESNACC C++ base class types according to a preferable embodiment of the present invention, the ESNACC base class inheritance relationship hierarchical diagram, wherein the AsnType is the top-level base class. AsnType is an abstract base class. On this basis, some simple types are inherited to support basis ASN.1 data types such as AsnInt, AsnReal, AsnRelativeOid, AsnAny, AsnOcts, AsnBool, AsnNulI, and asnString, wherein AsnInt is derived from PERGgeneral, AsnEnum is derived from AsnInt; AsnOid is derived from AsnRelativeOid; AsnList is an intermediate type for realizing other Asn.1 types; AsnSetOf and AsnSeqOf are derived from AsnList; the std::string and std::list of a standard template library are used to further support SEQUENCE OF, SET OF, etc. Some applied string types such as VisibleString, GraphicString, Ia5String, PrintableString, NumericString are derived from a basic string type AsnString, wherein GeneralizedTime and UTCTime are derived from VisibleString.

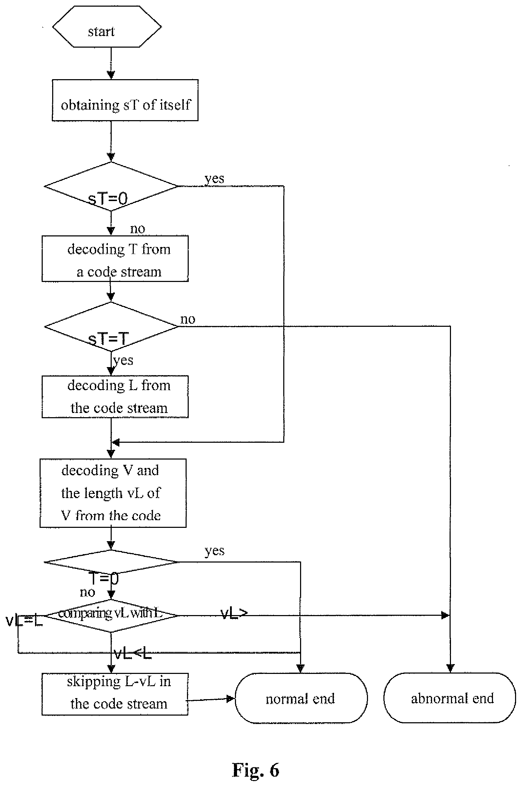

Fig. 6 is a flow chart of a TLV integral decoding function according to a preferable embodiment of the present invention.

Hereinafter, according to demand of a network management entity, TLV message encoding and decoding rules are realized based on ESNACC ,which is open source compiling platform of ASN.1. The present invention is realized by using any object-oriented programming language. The present application is described mainly in conjunction with C++. Other object-oriented programming languages may also be used, such as JAVA language.

### (I) Source of the Demand

As for network management entities, one network management entity often needs to manage various network element devices. Different devices have different versions, and the network management entity itself also has different versions. The network management entities and the device software need message interaction. In order to weaken the version dependency of the network management entities and the device software, the network management entities need to manage network element devices in a version-compatible manner, thereby a protocol rule is needed to meet the demand.

### (II) Compiling Platform

The ESNACC is an ASN.1open source compiler and supports BER encoding and PER encoding. an ASN. 1 basis module provided by the compiler. The ASN.1 compiler generally provides a compiler and a basic supporting module, and the compiler compiles an ASN.1 file to generate a specific programming language code, such as C++ and java. The types of the ASN.1 are compiled into the classes of a programming language. The basis supporting module provides support for execution of the generated codes. The TLV encoding and decoding rules are realized by modifying the compiler and the basic supporting module.

### (III) Realization of Specific TLV Encoding Rules

In a realizing procedure, the code stream is required to be debugged and the TLV code stream is required to be read, thus, T uses two bytes, and L uses four bytes, and the format is of network order. Other formats may be used to store T and L in practice, such as the representing format in the BER regarding length.
1. The syntax is extended in the ASN.1 to support a self-defined T, e.g.:

   ```
      QxString32 [10]::= GraphicString (32)
      NameAndStringValue-E [30] ::= SEQUENCE
      {
             name QxString32
            ,value QxString32
      }
```

   T is filled into the square brackets before "::=", and can be represented in various formats, such as a decimalism and a hexadecimalism. The syntax is an optional item, thus, the situation is impossible that T is represented as 0.
2. The messages defined in the following manners can intercommunicate between an old version and a new version.
   (1) Defining the Old Version

      ```
     ANode [0xF001]::= SEQUENCE
      {
         a1 QxUInt8,
         a2 QxUInt32,
      }
     BNode [0xF003]::= SEQUENCE
      {
         b1 QxUInt32,
         b2 QxUInt16,
         c3 QxUInt32
      }
      CNode [0xF005]::= SEQUENCE
      {
         a ANode,
         b BNode
      }
```
   (2) Defining the New Version

      ```
     ANode [0xF001]::= SEQUENCE
      {
         a1 QxUInt8,
         a2 QxUInt32,
         d3 QxUInt32,
         d4 QxUInt32
      }
     BNode [0xF003]::= SEQUENCE
      {
         b1 QxUInt32,
         b2 QxUInt16,
      }
     CNode [0xF005]::= SEQUENCE
      {
         a ANode,
         b BNode
      }
```

   In the new and old versions, members d3 and d4 are added at the tail of the ANode of the new version, while a member c3 is deleted in the BNode. They and CNode can achieve version compatibility and interaction with the method of the present invention. From the old version message code stream to the new version message, d3 and d4 use default values, while the code stream of c3 is omitted. From the new version message code stream to the old version message, the code streams of d3 and d4 are omitted, while the value of c3 is a default value. Other data are consistent between the new and old versions.
3. The ASN.1 syntax file of the ESNACC is modified to support the compiler to analyze and scan the T. During the realization, the T is placed in the description information of the META class of the classes.
4. Encoding and decoding functions are added to the basic base class of the ESNACC, which are mainly an integration encoding function, a value encoding function, an integration decoding function, and a value encoding function. The prototypes of the functions can be as follows:
   the integration encoding function: virtual AsnLen TlvEnc (AsnBuf &_b);
   the V encoding function: virtual AsnLen TlvEncContent (AsnBuf &_b);
   the integration decoding function: virtual AsnLen TlvDec (AsnBuf &_b, AsnLen&bytesDecoded); and
   the value decoding function: virtual AsnLen TlvDecContent (AsnBuf &_b, short iT, AsnLen iL, AsnLen & bytesDecoded);

   In the above, b is a code stream parameter, byteDecoded is the accumulated number of bytes of one decoded message code stream, iT is T of the code stream, iL is L of the code stream, and return values of TlvEnc and TlvEncContent are lengths of encoding code streams. Return values of TlvDec and TlvDecContext are the numbers of bytes decoded in the functions. Based on the realizing manner, the prototype of the functions varies as required.
5. The compiler is modified in the ESNACC to realize generating codes of various encoding and decoding functions, which are mainly a value encoding function and a value decoding function. Since the integration encoding and decoding functions can be universal for various types, the encoding and decoding procedures were described referring to Fig. 5 and in the above operation process of encoding and decoding the code stream.
6. According to the detailed description of the above step S10, a new/old version interface file.asn is made and an interface message.h and an interface message.cpp are generated, and the Client and the Server both use C++ to edit. Thus, in the similar manner as shown in Fig. 3, interaction and communication among different versions of the Client and the Server can be realized.

It shall be understood that, for the person skilled in the art, various possible modification or substitution may be made according to the description of the technical solution and the specific embodiments of the present invention, such as the position and the format of the T, the format of the L, the compression and encryption formats possibly used, and the functions to realize the present invention might be different, and moreover it might be realized even with using the manner of encoding operator instead of the member functions.

From the above description, it can be seen that, the present invention realizes the following technical effects:
1. converting a type into a code stream by an encoding method;
2. decoding the code stream into a class example by a decoding method;
3. intercommunicating among protocols of different versions;
4. self-defining a type T;
5. intercommunicating among programs of different languages; and
6. realizing high abstractly processing capacity due to using a virtual function mechanism of an object-oriented language.

The present method for processing a TLV format itself is universal and is not dependent on a specific ASN.1 complier and a specific object-oriented language. Even in a structured language, such TLV encoding and decoding can be realized.

Obviously, the person skilled in the art shall understand that, the above respective modules or respective steps of the present invention can be realized by a universal computing device. They can be integrated into a single computing device or distributed over a network composed of multiple computing devices. Optionally, they can be realized by using a program code executable by the computing device, thus, they can be stored in a storage device to be executed by the computing device or manufactured into respective integrated circuit modules, or their multiple modules or steps are manufactured into a single integrated circuit module to be realized. Thus, the present invention is not limited to any specific combination of hardware and software.

The descriptions above are only preferable embodiments of the present invention, which are not used to restrict the present invention. The present invention may have various modifications and changes. Any modifications, equivalent substitutions, improvements are all included in the scope of protection of the present invention.

## Claims

1. A method for processing a Type Length Value, TLV, format of communication data, **characterized by** comprising the following steps:
defining a type, T, of an integer type in an Abstract Syntax Notation 1, ASN. 1, format;
a sending side filling in a message in the ASN.1 format with the message including a data structure instance; and
the sending side encoding the message into a code stream wherein the code stream of the data structure instance in the message includes a value, V, or includes the V, the integer type of the V, and a length L of the V;
wherein when the integer type is 0 or absent, the code stream only comprises V, and when the integer type is not 0, the code stream comprises the V, the length L of the V, and the integer type.

2. The method for processing the TLV format according to Claim 1, **characterized in that**, defining the integer type in the ASN.1 format particularly comprises:
setting the ASN.1 format to allow defining the integer type; and
defining a structure of the integer type in a format of "string type name [X]:: =defining a structure", wherein the X refers to the integer type.

3. The method for processing the TLV format according to Claim 2, **characterized in that**, defining the structure of the integer type in the format of "string type name [X]:: =defining a structure" particularly comprises:
setting the structure of the integer type as a type of SEQUENCE, SET or CHOICE with the same type name, and specifying that if the member thereof needs be modified, it is only allowed of net increase or net decrease in the members and only allowed to change a tail member but not allowed to modify the type.

4. The method for processing the TLV format according to Claim 3, **characterized by** further comprising:
setting an ASN.1 format compiler with a function of processing the integer type.

5. The method for processing the TLV format according to Claim 4, **characterized by** further comprising:
obtaining, through a function, the integer type in a C++ type in the ASN.1 format.

6. The method for processing the TLV format according to Claim 1, **characterized in that**, the step of the sending side encoding the message into the code stream comprises:
calling a value encoding function, a length encoding function, and an integer type encoding function by an integration encoding function, or calling only the value encoding function by the integration encoding function, to encode the message into the code stream;
the integer type encoding function being used for obtaining the integer type of the code stream according to data encoding in the data structure instance;
the value encoding function being used for encoding simple data in the data structure instance into the V of the code stream as for the data structure instance of a simple data type;
the value encoding function being used for sequentially calling the integration encoding function of individual members in the data structure instance as for the data structure instance of the SEQUENSE or SET type;
the value encoding function being used for sequentially calling the integration encoding function of individual elements of an array in the data structure instance as for the data structure instance of the SEQUENSE OF or SET OF type; and
the value encoding function being used for encoding a selected member in the data structure instance into the V of the code stream as for the data structure instance of the CHOICE type, wherein the V comprises the sequence number of the selected member in the CHOICE and the selected member.

7. The method for processing the TLV format according to Claim 6, **characterized in that**, when the integer type is 0 or absent, the integration encoding function calls only the value encoding function; and when the integer type is not 0, the code stream comprises the V, the length L of the V, and an integer type.

8. The method for processing the TLV format according to Claim 1, **characterized by** further comprising: a receiving side decoding the code stream.

9. The method for processing the TLV format according to Claim 8, **characterized in that**, decoding the code stream particularly comprises:
calling a value decoding function, a length decoding function, and an integer type decoding function by an integration decoding function, or calling only the value decoding function by the integration decoding function, to decode the code stream;
the integer type decoding function being used for decoding the code stream according to the integer type in the code stream;
the value decoding function being used for decoding the V in the code stream into simple data in the data structure instance as for the data structure instance of a simple data type;
the value decoding function being used for decoding sequentially the V in the code stream into data of individual members in the data structure instance as for the data structure instance of the SEQUENSE or SET type;
the value decoding function being used for decoding sequentially the V in the code stream into individual elements of an array in the data structure instance as for the data structure instance of the SEQUENSE OF or SET OF type, during which it is judged whether the length of a decoding stream in the structure is smaller than L, and if it is smaller than the L, the decoding is continued, otherwise, the decoding in the present structure is stopped; and
the value decoding function being used for decoding a sequence number in the code stream and a member corresponding to the sequence number as for the data structure instance of the CHOICE type, wherein if the member corresponding to the sequence number does not exist in the present structure, the value decoding function is finished.

10. The method for processing the TLV format according to Claim 9, **characterized in that**, the step of calling the value decoding function, the length decoding function, and the integer type decoding function by the integration decoding function or calling only the value decoding function by the integration decoding function to decode the code stream particularly comprises:
determining whether the integer type is 0 or absent by the integration decoding function;
if it is not 0 or not absent, calling the value decoding function, the length decoding function, and the integer type decoding function, wherein the value decoding function is called to decode the integer type in the code stream to verify whether the obtained integer type is consistent with itself integer type, and if it is not consistent, it is considered as abnormal decoding, the length decoding function is called to decode the L in the code stream, and then the value decoding function is called to decode the V in the code stream; if the length vL obtained by decoding the V is smaller than the L, L-vL bytes are skipped; and
if it is 0 or absent, calling only the value decoding function.

## Patentansprüche

1. Verfahren zur Verarbeitung eines Typ-Längen-Wert-, TLV-, Formats von Kommunikationsdaten,
**gekennzeichnet durch** die folgenden Schritte:
Definieren eines Typs, T, des ganzzahligen Typs in einem Abstrakten-Syntax-Notation-1, ASN.1, Format;
Einfügen auf Sendeseite einer Nachricht in dem ASN.1-Format, wobei die Nachricht eine Datenstrukturinstanz enthält; und
Kodieren auf der Sendeseite der Nachricht in einen Code-Datenstrom, wobei der Code-Datenstrom der Datenstrukturinstanz in der Nachricht einen Wert, V, enthält oder den Wert V, den ganzzahligen Typ von V und eine Länge L des V enthält;
wobei, wenn der ganzzahlige Typ gleich 0 ist oder fehlt, der Code-Datenstrom lediglich V enthält, und wenn der ganzzahlige Typ nicht gleich 0 ist, der Code-Datenstrom V, die Länge L von V und den ganzzahligen Typ enthält.

2. Verfahren zur Verarbeitung des TLV-Formats nach Anspruch 1, **dadurch gekennzeichnet, dass** Definieren des ganzzahligen Typs in dem ASN.1-Format insbesondere umfasst:
Festlegen des ASN.1-Formats derart, dass ein Definieren des ganzzahligen Typs ermöglicht wird; und
Definieren einer Struktur des ganzzahligen Typs in einem Format aus "Zeichenkettentyp-Name [X]:: = Definieren einer Struktur", wobei X den ganzzahligen Typ gezeichnet.

3. Verfahren zur Verarbeitung des TLV-Formats nach Anspruch 2, **dadurch gekennzeichnet, dass** Definieren der Struktur des ganzzahligen Typs in dem Format von "Zeichenkettentyp-Name [X]:: = Definieren einer Struktur" insbesondere umfasst:
Festlegen der Struktur des ganzzahligen Typs als einen Typ mit SEQUENCE, SET oder CHOICE mit dem gleichen Typnamen und Spezifizieren, dass, wenn das Mitglied davon zu modifizieren ist, es nur zulässig ist, dass eine Netto-Zunahme oder eine Netto-Abnahme der Mitglieder erfolgt und dass nur Änderung eines letzten Mitglieds möglich ist, jedoch ein Modifizieren des Typs nicht zulässig ist.

4. Verfahren zur Verarbeitung des TLV-Formats nach Anspruch 3, ferner **gekennzeichnet durch**:
Festlegen eines ASN.1-Format-Compilers mit einer Funktion zur Verarbeitung des ganzzahligen Typs.

5. Verfahren zur Verarbeitung des TLV-Formats nach Anspruch 4, ferner **gekennzeichnet durch**:
Erhalten des ganzzahligen Typs in einem C++ Typ in dem ASN.1-Format mittels einer Funktion.

6. Verfahren zur Verarbeitung des TLV-Formats nach Anspruch 1, **dadurch gekennzeichnet, dass** der Schritt des Kodierens der Nachricht in den Code-Datenstrom auf der Sendeseite umfasst:
Aufrufen einer Funktion zum Wertekodierung, einer Funktion zur Längenkodierung und einer Funktion zur Kodierung eines ganzzahligen Typs durch eine Funktion zur Integrationskodierung, oder Aufrufen einer Funktion zur Wertekodierung durch die Funktion zur Integrationskodierung, um die Nachrichten in den Code-Datenstrom zu kodieren;
wobei die Funktion zur Kodierung des ganzzahligen Typs zum Erhalten des ganzzahligen Typs des Code-Datenstroms entsprechend den Daten zur Kodierung in der Datenstrukturinstanz verwendet wird;
wobei die Funktion zur Wertekodierung zur Kodierung von einfachen Daten in der Datenstrukturinstanz in den Wert V des Code-Datenstroms wie für die Datenstrukturinstanz eines einfachen Datentyps verwendet wird;
wobei die Funktion zur Wertekodierung zum sequenziellen Aufrufen der Funktionen zur Integrationskodierung einzelner Mitglieder in der Datenstrukturinstanz wie für die Datenstrukturinstanz von dem Typ SEQUENSE oder SET verwendet wird;
wobei die Funktion zur Wertecodierung für sequenzielles Aufrufen der Funktion zur Integrationskodierung einzelner Elemente eines Feldes in der Datenstrukturinstanz wie für die Datenstrukturinstanz des Typs SEQUENSE OF oder SET OF verwendet wird; und
die Funktion zur Wertekodierung zum Kodieren einer ausgewählten Anzahl in der Datenstrukturinstanz in den Wert V des Code-Datenstroms wie für die Datenstrukturinstanz des Typs CHOICE verwendet wird, wobei der Wert V die Sequenznummer des ausgewählten Mitglieds in der CHOICE und das ausgewählte Mitglied enthält.

7. Verfahren zur Verarbeitung des TLH-Formats nach Anspruch 6, **dadurch gekennzeichnet, dass**, wenn der ganzzahlige Typ gleich 0 ist oder fehlt, die Funktion zur Integrationskodierung nur die Funktion zur Wertekodierung aufruft; und wenn der ganzzahlige Typ gleich 0 ist, der Code-Datenstrom den Wert V, die Länge L von V und einen ganzzahligen Typ enthält.

8. Das Verfahren zur Verarbeitung des TLV-Formats nach Anspruch 1, ferner **gekennzeichnet durch**: Dekodieren des Grund-Datenstroms auf Empfängerseite.

9. Verfahren zur Verarbeitung des TLV-Formats nach Anspruch 8, **dadurch gekennzeichnet, dass** Dekodieren des Grund-Datenstroms insbesondere umfasst:
Aufrufen eine Funktion zum Dekodieren eines Werts, einer Funktion zum Dekodieren einer Länge und einer Funktion zum Dekodieren eines ganzzahligen Typs mittels einer Funktion zur Integrationsdekodierung, oder Aufrufen lediglich der Funktion zum Dekodieren eines Wertes durch die Funktion zur Integrationsdekodierung, um den Code-Datenstrom zu dekodieren;
wobei die Funktion zur Dekodierung des ganzzahligen Typs zum Dekodieren des Code-Datenstroms gemäß dem ganzzahligen Typ in dem Code-Datenstrom verwendet wird;
wobei die Funktion zum Dekodieren eines Wertes für das Dekodieren von V in dem Code-Datenstrom in einfache Daten in der Datenstrukturinstanz wie für die Datenstrukturinstanz eines einfachen Datentyps verwendet wird;
wobei die Funktion zum Dekodieren eines Wertes für das sequenzielle Dekodieren von V in dem Code-Datenstrom in Daten einzelner Mitglieder in der Datenstrukturinstanz wie für die Datenstrukturinstanz des Typs SEQUENSE oder SET verwendet wird;
wobei die Funktion zum Dekodieren eines Wertes zum sequenziellen Dekodieren von V in dem Code-Datenstrom in einzelne Elemente eines Feldes in der Datenstrukturinstanz wie für die Datenstrukturinstanz des Typs SEQUENSE OF oder SET OF verwendet wird, während welcher bewertet wird, ob die Länge eines dekodierten Datenstroms in der Struktur kleiner als L ist, und wenn sie kleiner ist als L ist, das Dekodieren fortgesetzt wird, ansonsten das Dekodieren in der vorliegenden Struktur beendet wird; und
wobei die Funktion zum Dekodieren eines Wertes zum Dekodieren einer Sequenznummer in dem Code-Datenstrom und eines Mitglieds entsprechend der Sequenznummer wie für die Datenstrukturinstanz des Typs CHOICE verwendet wird, wobei, wenn das der Sequenznummer entsprechende Mitglied in der vorliegenden Struktur nicht existiert, die Funktion zum Dekodieren eines Wertes beendet wird.

10. Verfahren zur Verarbeitung des TLV-Formats nach Anspruch 9, **dadurch gekennzeichnet, dass** der Schritt des Aufrufens der Funktion zum Dekodieren eines Wertes, der Funktion zum Dekodieren einer Länge und die Funktion zum Dekodieren des ganzzahligen Typs durch die Funktion zur Integrationsdekodierung, oder das Aufrufen nur der Funktion zum Dekodieren eines Wertes durch die Funktion zur Integrationsdekodierung zum Dekodieren des Code-Datenstroms insbesondere umfasst:
Ermitteln, ob der ganzzahlige Typ gleich 0 ist oder fehlt, mittels der Funktion zur Integrationsdekodierung;
wenn er nicht gleich 0 ist oder fehlt, Aufrufen der Funktion zum Dekodieren eines Wertes, der Funktion zum Dekodieren einer Länge und der Funktion zum Dekodieren eines ganzzahligen Typs, wobei die Funktion zum Dekodieren eines Wertes aufgerufen wird, um den ganzzahligen Typ in dem Code-Datenstrom zu dekodieren und um zu verifizieren, ob der erhaltene ganzzahlige Typ mit seinem eigenen ganzzahligen Typ konsistent ist, und wenn er nicht konsistent ist, wird dies als fehlerhaftes Dekodieren betrachtet, wobei die Funktion zum Dekodieren einer Länge aufgerufen wird, um das L in dem Code-Datenstrom zu dekodieren und anschließend die Funktion zum Dekodieren eines Wertes aufgerufen wird, um V in dem Code-Datenstrom zu dekodieren; wobei, wenn die Länge vL, die durch Dekodieren von V erhalten wird, kleiner ist als L, dann L - vL Bytes übersprungen werden; und
wenn er gleich 0 ist oder fehlt, Aufrufen nur der Funktion zum Dekodieren eines Wertes.

## Revendications

1. Procédé de traitement d'un format Type Longueur Valeur, TLV, de données de communication,
**caractérisé en ce qu'**il comprend les étapes suivantes :
la définition d'un type, T, d'un type d'entier dans un format de notation de syntaxe abstraite n° 1, ASN.1 ;
le remplissage par un côté envoi d'un message dans le format ASN.1 avec le message comportant une instance de structure de données ; et
le codage par le côté envoi du message dans un train de codes, dans lequel le train de codes de l'instance de structure de données dans le message comporte une valeur, V, ou comporte la V, le type d'entier de la V, et une longueur L de la V ;
dans lequel lorsque le type d'entier est 0 ou absent, le train de codes comprend uniquement V, et lorsque le type d'entier n'est pas 0, le train de codes comprend la V, la longueur L de la V, et le type d'entier.

2. Procédé de traitement du format TLV selon la revendication 1, **caractérisé en ce que**, la définition du type d'entier dans le format ASN.1 comprend en particulier :
le paramétrage du format ASN.1 pour permettre la définition du type d'entier ; et
la définition d'une structure du type d'entier dans un format de « nom de type de chaîne [X] :: = la définition d'une structure », dans lequel le X désigne le type d'entier.

3. Procédé de traitement du format TLV selon la revendication 2, **caractérisé en ce que**, la définition de la structure du type d'entier dans le format « nom de type de chaîne [X] :: = la définition d'une structure » comprend en particulier :
le paramétrage de la structure du type d'entier en tant que type de SEQUENCE, SET ou CHOICE avec le même nom de type, et la spécification permettant de savoir que, si son membre doit être modifié, il est uniquement admis une augmentation nette ou une diminution nette des membres et uniquement admis de changer un membre de queue mais pas admis de modifier le type.

4. Procédé de traitement du format TLV selon la revendication 3, **caractérisé en ce qu'**il comprend en outre :
le paramétrage d'un compilateur de format ASN.1 avec une fonction de traitement du type d'entier.

5. Procédé de traitement du format TLV selon la revendication 4, **caractérisé en ce qu'**il comprend en outre :
l'obtention, par une fonction, du type d'entier dans un type C++ dans le format ASN.1.

6. Procédé de traitement du format TLV selon la revendication 1, **caractérisé en ce que**, l'étape de codage par le côté envoi du message dans le train de codes comprend :
l'appel d'une fonction de codage de valeur, d'une fonction de codage de longueur, et d'une fonction de codage de type d'entier par une fonction de codage d'intégration, ou l'appel uniquement de la fonction de codage de valeur par la fonction de codage d'intégration, pour coder le message dans le train de codes ;
la fonction de codage de type d'entier étant utilisée pour obtenir le type d'entier du train de codes selon un codage de données dans l'instance de structure de données ;
la fonction de codage de valeur étant utilisée pour coder des données simples dans l'instance de structure de données en la V du train de codes comme pour l'instance de structure de données d'un type de données simples ;
la fonction de codage de valeur étant utilisée pour appeler séquentiellement la fonction de codage d'intégration de membres individuels dans l'instance de structure de données comme pour l'instance de structure de données du type SEQUENCE ou SET ;
la fonction de codage de valeur étant utilisée pour appeler séquentiellement la fonction de codage d'intégration d'éléments individuels d'un réseau dans l'instance de structure de données comme pour l'instance de structure de données du type SEQUENCE OF ou SET OF ; et
la fonction de codage de valeur étant utilisée pour coder un membre sélectionné dans l'instance de structure de données en la V du train de codes comme pour l'instance de structure de données du type CHOICE, dans lequel la V comprend le numéro de séquence du membre sélectionné dans le CHOICE et le membre sélectionné.

7. Procédé de traitement du format TLV selon la revendication 6, **caractérisé en ce que**, lorsque le type d'entier est 0 ou absent, la fonction de codage d'intégration appelle uniquement la fonction de codage de valeur ; et lorsque le type d'entier n'est pas 0, le train de codes comprend la V, la longueur L de la V, et un type d'entier.

8. Procédé de traitement du format TLV selon la revendication 1, **caractérisé en ce qu'**il comprend en outre : le décodage par un côté réception du train de codes.

9. Procédé de traitement du format TLV selon la revendication 8, **caractérisé en ce que**, le décodage du train de codes comprend en particulier :
l'appel d'une fonction de décodage de valeur, d'une fonction de décodage de longueur, et d'une fonction de décodage de type d'entier par une fonction de décodage d'intégration, ou l'appel uniquement de la fonction de décodage de valeur par la fonction de décodage d'intégration, pour décoder le train de codes ;
la fonction de décodage de type d'entier étant utilisée pour décoder le train de codes selon le type d'entier dans le train de codes ;
la fonction de décodage de valeur étant utilisée pour décoder la V dans le train de codes en données simples dans l'instance de structure de données comme pour l'instance de structure de données d'un type de données simples ;
la fonction de décodage de valeur étant utilisée pour décoder séquentiellement la V dans le train de codes en données de membres individuels dans l'instance de structure de données comme pour l'instance de structure de données du type SEQUENCE ou SET ;
la fonction de décodage de valeur étant utilisée pour décoder séquentiellement la V dans le train de codes en éléments individuels d'un réseau dans l'instance de structure de données comme pour l'instance de structure de données du type SEQUENCE OF ou SET OF, pendant laquelle il est estimé si la longueur d'un train de décodage dans la structure est plus petite que L, et si elle est plus petite que L, le décodage est poursuivi, sinon, le décodage dans la présente structure est arrêté ; et
la fonction de décodage de valeur étant utilisée pour décoder un numéro de séquence dans le train de codes et un membre correspondant au numéro de séquence comme pour l'instance de structure de données du type CHOICE, dans lequel si le membre correspondant au numéro de séquence n'existe pas dans la présente structure, la fonction de décodage de valeur est terminée.

10. Procédé de traitement du format TLV selon la revendication 9, **caractérisé en ce que**, l'étape d'appel de la fonction de décodage de valeur, de la fonction de décodage de longueur, et de la fonction de décodage de type d'entier par la fonction de décodage d'intégration ou l'appel uniquement de la fonction de décodage de valeur par la fonction de décodage d'intégration pour décoder le train de codes comprend en particulier :
la détermination permettant de savoir si le type d'entier est 0 ou absent par la fonction de décodage d'intégration ;
s'il n'est pas de 0 ou n'est pas absent, l'appel de la fonction de décodage de valeur, de la fonction de décodage de longueur, et de la fonction de décodage de type d'entier, dans lequel la fonction de décodage de valeur est appelée pour décoder le type d'entier dans le train de codes pour vérifier si le type d'entier obtenu est cohérent avec son propre type d'entier, et s'il n'est pas cohérent, il est considéré comme un décodage anormal, la fonction de décodage de longueur est appelée pour décoder la L dans le train de codes, puis la fonction de décodage de valeur est appelée pour décoder la V dans le train de codes ; si la longueur vL obtenue en décodant la V est plus petite que la L, les octets L-vL sont omis ; et
s'il est de 0 ou absent, l'appel uniquement de la fonction de décodage de valeur.
